(19) Europäisches Patentamt European Patent Office Office européen des brevets

(11) **EP 3 340 735 B1**

(12) **EUROPEAN PATENT SPECIFICATION**

(45) Date of publication and mention of the grant of the patent:
**10.07.2019  Bulletin 2019/28**

(51) Int Cl.:
*H05B 3/04* *(2006.01)*    *F16L 53/00* *(2018.01)*
*H05B 3/78* *(2006.01)*    *E21B 36/04* *(2006.01)*

(21) Application number: **16781042.3**

(22) Date of filing: **17.08.2016**

(86) International application number:
**PCT/BR2016/050204**

(87) International publication number:
**WO 2017/031563 (02.03.2017 Gazette 2017/09)**

(54) **SUBMARINE ELECTRICAL HEATING SYSTEM, HYDRATE REMEDIATION AND CONTROL METHOD, AND USE OF SAID SYSTEM**

ELEKTRISCHES HEIZUNGSSYSTEM, HYDRATLÖSUNGS- UND STEUERUNGSVERFAHREN UND VERWENDUNG DES SYSTEMS

SYSTÈME DE CHAUFFAGE ÉLECTRIQUE SOUS-MARIN, PROCÉDÉ DE REMÉDIATION ET D'ÉLIMINATION D'HYDRATES ET UTILISATION DUDIT SYSTÈME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **21.08.2015   BR 102015202458**

(43) Date of publication of application:
**27.06.2018   Bulletin 2018/26**

(73) Proprietor: **FMC Technologies Do Brasil LTDA 21941-615 Rio de Janeiro (BR)**

(72) Inventors:
• **DE ALMEIDA FILHO, Arthur Eugênio 20260-230 Rio de Janeiro (BR)**
• **CARVALHAR MARINS, Alexandre 24220-401 Niterói - RJ (BR)**
• **DO ROSÁRIO CORDEIRO JUNIOR, Calvino Vitor 22750-350 Rio de Janeiro - RJ (BR)**
• **FREIRE MACHADO, Jose Felipe 22790-972 Rio de Janeiro - RJ (BR)**
• **MIRANDA CORRÊA DE GUAMÁ, Fernando Francisco 20270-270 Rio de Janeiro - RJ (BR)**

(74) Representative: **Onsagers AS P.O. Box 1813 Vika 0123 Oslo (NO)**

(56) References cited:
**GB-A- 2 485 647      US-A- 5 978 550 US-B1- 6 315 497**

EP 3 340 735 B1

## Description

## Field of the Invention

The present invention refers to a system and method of heating for production submarine equipments involved in the fluids flowing and applied in the Oil and Gas Industry, as for example, valves and flow rate gauges, between others. The present invention is intended to aid in the remediation and treatment hydrate, which was formed and deposited inside the tubing and equipments, by applying electric power to a resistance, generating and dissipating heat. This resistance is internally installed to the equipment and receives energy from electrical supply of a ROV (Remote Operated Vehicle).

## Background of the Invention

One of the greatest challenges found in the Oil and Gas Industry, is related to mitigation, treatment and remediation of hydrates.

Gas hydrates are crystalline solids based on water physically similar to ice, wherein small non-polarized molecules are captured inside "cages" of water molecules joined by hydrogen bonding. In other words, water acts as a host molecule and the host molecule is typically a gas.

Most part of gases with low molecular weight, as for example, $O_2$, $H_2$, $N_2$, $CO_2$, $CH_4$, $H_2S$, Ar, Kr, and Xe, as well as some upper hydrocarbons and freons may form hydrates under suitable conditions of temperature and pressure.

Formation and dissociation of hydrates occur through transitions of first order phase, and non-chemical reactions. However, once there is no binding between water molecules and gas at issue, hydrates may not be considered chemical compounds.

When hydrates' formation occurs in a flowing system, a blocking *"plug"* is formed avoiding the production flow. Such blocking is extremely difficult to be reverted and mechanisms normally employed for treating and dissociating hydrates and, consequently, the system unblocking, require several equipments and may take, eventually weeks, generating huge losses and increasing the risks involved in the process, besides the time wherein the production is stopped.

In this way, systems are operated with preventive measures in a way to avoid creating conditions favorable to hydrates formation. An example widely used in the systems is the injection of an alcohol, as for example, the monoethylene glycol (MEG), enabling the temperature of hydrate formation is displaced to a much lower temperature, even when pressure and temperature conditions are kept, eventually, enabling the production continuity.

Once formed, so that hydrates are dissociated it is necessary to make its phase change, modifying pressure or temperature variables, or even both. However, these modifications are only possible using the equipments specific for pressure relief, and may require the use of support vessels, fluids circulation, among others, impacting in the production and in the process cost.

Techniques used for heating submarine equipments externally through hot water circulation or even circulation of electrical current for remediation and treatment hydrate aiming its effective spreading, are known. However, it is not described any method or system involving the heat application internally to submarine equipment.

The patent US 6,564,011 discloses a heating system, for remedying hydrate, applicable to submarine equipments for producing oil and gas, which is constituted of an electrical cable positioned in the external wall of the equipment, protected by a thermal isolating layer, and that generates heat by circulating electrical current.

The patent US 5,424,608 discloses a heating system, for remedying hydrate, applicable to submarine equipments for producing oil and gas, which is constituted of a tubing positioned in the equipment external wall, protected by a thermal isolating layer, and that generates heat by circulating hot water.

In both documents systems applicable to submarine equipments are described. But, both use heat sources positioned in the external walls of these equipments.

Further, the use of heat sources outside the equipment, either in the case of electrical current circulation as in hot water circulation, it is not a much efficient feature. The heat transmission of the external part to the internal part may not occur in the most suitable manner, as well as the thermal coupling of the external wall of the equipment to its inside may not be good. In addition, the system assemble allows a lot of heat exchange with the external mean even in the presence of thermal insulation.

Due to lack of efficiency of the systems now existent, the amount of energy required for heating is too increased. Normally, for these cases the only source able to provide energy necessary for the system is found in the surface, once, difficultly a ROV have this energy amount available, which increase the cost and operationally makes it much harder for the systems using these solutions.

In this way, it is necessary to develop new alternative methods and systems most viable and efficient in the remediation and treatment of hydrate aiming its effective spreading, applicable to submarine equipments, promoting its unblocking, allowing its correct operation and enabling the production flow warranty.

Aiming to solve the state of art problems, mentioned above, it was developed a system able to generate and dissipate heat in the internal area of the equipment, using the electrical supply energy of a ROV.

## Brief Description of the Figure

The present invention will be described in the following regarding the attached figure, which represents a schematic form and not limitative to its scope.

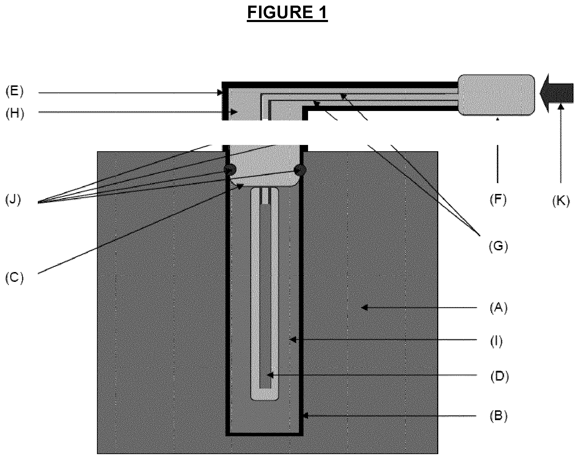

- Figure 1 represents a partial schematic form of the cross section of a submarine equipment according to the present invention illustrating its main components.

## Detailed description of the invention

In a first aspect, the present invention provides an internal heating system for submarine equipments, by applying electric power. According to the present invention it becomes possible to promote the remediation of hydrates formed inside the equipment by supplying heating.

The said system is formed by a cavity (B) arranged in the body of a submarine equipment (A), filled with a fluid suitable for heat transfer *(thermal fluid)* (I) and in which a penetrator (C) is installed coupled to an encapsulated resistance (D). The said penetrator (C) acts as a barrier for external environment and ensures the cavity (B) is with the atmospheric pressure due to an O-ring type sealing barrier (J).

The other side of the penetrator (C) is interlinked to a compensated hose (E) to support the sea bottom pressure, provided with inner electrical wires (G) and being filled with dielectric oil (H).

The opposed side of the hose is ended in an electrical connector "subseawet *mate connector*" suitable to operate with a ROV (F), working as point of contact with the energy source (K) received from the said ROV.

The energy received is then changed into heat through Joule effect, in a way the resistance exposure to electrical energy for a determined period of time will result in the production of thermal energy, according to equations below:

$$P \ (watts) = E \ x \ I = E^{*}2/R \ (i)$$

$$R = E^{*}2/P \ (ii)$$

where P = watts; E = volts; I = amperes; and R = $\Omega$ (ohms).

As can be appreciated by those skilled in the art, the documents of the state of the art mentioned above disclose methods wherein the heat is generated in a place outside that on where it must act to, then, be directed to the place where hydrates to be dissociated are met, occurring by conduction. In the present invention the system acts in a more located form, which is able to generate heat internally to the equipment and dissipate it by its surrounding reaching efficiently the hydrates agglomerate. In this way, the present invention avoids the problems presented by the methods of the state of the art, as for example, heat loss, high energetic demand, low efficiency, among other drawbacks.

In a second aspect, the present invention provides a method for remedying and treating hydrates aiming its effective spreading, applicable to a submarine equipment and comprising the steps of:

    i) provide the coupling of an energy source to an electrical connector of the submarine electrical heating system;

    ii) provide the electric power supply to an encapsulated internal electrical resistance;

    iii) change the said electrical energy into thermal energy through the said electrical resistance;

    iv) provide the thermal energy spreading throughout the environment inside the equipment and its surrounding.

In a third aspect, the present invention refers the use of the submarine electrical heating system according to the present invention for remedying and treating hydrates aiming its effective spreading, in fluids flowing systems in the Oil and Gas Industry.

## Claims

1. Submarine electrical heating system, comprising a cavity (B) filled with a fluid suitable for heat transfer (I), said cavity (B) being arrangeable in the body of a submarine equipment (A), the said cavity (B) having a penetrator (C) installed thereon having an O-ring type sealing barrier (J), said penetrator (C) interlinking an encapsulated resistance (D) to a compensated hose (E) filled with dielectric oil (H), the said compensated hose (E) housing inner electrical wires (G) and having an electrical connector (F) in its end, being the said connector the point of contact with an energy source (K).

2. System, according to claim 1, wherein the submarine equipment is any submarine equipment involved in fluids flowing systems employed in the Oil and Gas Industry.

3. System, according to claim 2, wherein the submarine equipment is selected between slide type valves, ball type valves, monophasic flow gauges or multiphasic flow gauges.

4. System, according to claim 1, wherein the energy source is a Remote Operated Vehicle.

5. System, according to claim 1, wherein the electrical connector is "subseawet mate connector" type.

6. Method to remedy and treat hydrates, comprising the steps of:

> i) provide the coupling of an energy source to electrical connector of a submarine electrical heating system according to claims 1 to 5;
> ii) provide the supply of electric power to an encapsulated internal electrical resistance;
> iii) change the said electrical energy into thermal energy through the said electrical resistance; and
> iv) provide the thermal energy spreading throughout the environment of the equipment and its surrounding.

7. Use of the submarine electrical heating system, according to claims 1 to 5, wherein it is applied for remedying and treating hydrates aiming its effective dissociation in fluids flowing systems in the Oil and Gas Industry.

**Patentansprüche**

1. Elektrisches Unterwasserheizsystem, das einen Hohlraum (B) umfasst, der mit einem für die Wärmeübertragung (I) geeigneten Fluid gefüllt ist, wobei der Hohlraum (B) im Körper einer Unterwasserausrüstung (A) angeordnet werden kann, wobei der Hohlraum (B) einen daran befestigten Eindringkörper (C) mit einer Dichtungssperre (J) der Art O-Ring aufweist, wobei der Eindringkörper (C) einen gekapselten Widerstand (D) mit einem kompensierten Schlauch (E) verbindet, der mit dielektrischem Öl (H) gefüllt ist, wobei im kompensierten Schlauch (E) interne Stromkabel (G) untergebracht sind und dieser an seinem Ende einen elektrischen Steckverbinder (F) aufweist, wobei der Steckverbinder die Kontaktstelle mit einer Energiequelle (K) darstellt.

2. System gemäß Anspruch 1, wobei die Unterwasserausrüstung jede Unterwasserausrüstung sein kann, die in Fluidströmungssystemen, die in der Öl- und Gasindustrie verwendet werden, beinhaltet ist.

3. System gemäß Anspruch 2, wobei die Unterwasserausrüstung aus Schieberventilen, Kugelventilen, Einphasendurchflussmessern oder Mehrphasendurchflussmessern ausgewählt ist.

4. System gemäß Anspruch 1, wobei die Energiequelle ein ferngesteuertes Unterwasserfahrzeug ist.

5. System gemäß Anspruch 1, wobei der elektrische Steckverbinder der Art "unterseeischer Wetmate-Steckverbinder" ist.

6. Verfahren zur Beseitigung und Aufbereitung von Hydraten, das folgende Schritte umfasst:

> i) Bereitstellen der Kopplung einer Energiequelle mit dem elektrischen Steckverbinder eines elektrischen Unterwasserheizsystems gemäß den Ansprüchen 1 bis 5;
> ii) Bereitstellen der Versorgung mit elektrischer Energie an einen internen gekapselten elektrischen Widerstand;
> iii) Umwandeln der elektrischen Energie in Wärmeenergie durch den elektrischen Widerstand; und
> iv) Bereitstellen der Verteilung der Wärmeenergie in der Umgebung der Ausrüstung und ihrem Umfeld.

7. Einsatz des elektrischen Unterwasserheizsystems gemäß den Ansprüchen 1 bis 5, wobei dieses für die Beseitigung und Aufbereitung von Hydraten angewandt wird und auf deren effektive Trennung in Fluidströmungssystemen in der Öl- und Gasindustrie abzielt.

**Revendications**

1. Système de chauffage électrique sous-marin, comprenant une cavité (B) remplie avec un fluide approprié pour un transfert de chaleur (I), ladite cavité (B) pouvant être agencée dans le corps d'un équipement sous-marin (A), ladite cavité (B) ayant un élément de pénétration (C) installé sur celle-ci comportant une barrière d'étanchéité de type joint torique (J), ledit élément de pénétration (C) interconnectant une résistance encapsulée (D) et un tuyau compensé (E) rempli avec une huile diélectrique (H), ledit tuyau compensé (E) logeant des fils électriques intérieurs (G) et comportant un connecteur électrique (F) dans son extrémité, ledit connecteur étant le point de contact avec une source d'énergie (K).

2. Système, selon la revendication 1, dans lequel l'équipement sous-marin est n'importe quel équipement sous-marin impliqué dans des systèmes d'écoulement de fluides utilisés dans les industries du pétrole et du gaz.

3. Système, selon la revendication 2, dans lequel l'équipement sous-marin est sélectionné parmi des vannes de type à coulisseau, des vannes de type à bille, des débitmètres monophasiques ou des débitmètres multiphasiques.

4. Système, selon la revendication 1, dans lequel la source d'énergie est un véhicule commandé à distance.

5. Système, selon la revendication 1, dans lequel le connecteur électrique est un connecteur du type « subseawet-mate ».

**6.** Procédé pour remédier aux et traiter les hydrates, comprenant les étapes consistant à :

(i) réaliser le couplage d'une source d'énergie à un connecteur électrique d'un système de chauffage électrique sous-marin selon les revendications 1 à 5 ;
(ii) réaliser la fourniture de puissance électrique à une résistance électrique interne encapsulée ;
(iii) changer ladite énergie électrique en énergie thermique par l'intermédiaire de ladite résistance électrique ; et
(iv) réaliser la diffusion de l'énergie thermique dans tout l'environnement de l'équipement et ses alentours.

**7.** Utilisation du système de chauffage électrique sous-marin, selon les revendications 1 à 5, dans laquelle il est appliqué pour remédier aux et traiter les hydrates visant leur dissociation efficace dans les systèmes d'écoulement de fluides dans les industries du pétrole et du gaz.

## FIGURE 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6564011 B
- US 5424608 A